# EUROPEAN PATENT APPLICATION

(11) **EP 2 636 888 A1**
(43) Date of publication of application: **11.09.2013**
(21) Application number: 12158820.6
(22) Date of filing: 09.03.2012
(51) Int. Cl.: F03D 1/00

(54) **Retainer for transporting and storing a segment of a stator adapted to be part of a generator of a wind turbine**

(71) Applicant: Siemens Aktiengesellschaft, 80333 München (DE)
(72) Inventor: Hansen, Alan, 2610 Rødovre (DK); Maroti, Stefan, 8600 Silkeborg (DK); Nilsson, Steffen, 7120 Vejle Ø (DK); Thaarup, Klaus, 2670 Greve (DK)

(57) **Abstract**

Retainer (1) for transporting and storing a segment (2) of a stator adapted to be part of a generator of a wind turbine, characterized in that a fastening device (9) adapted to releasably fasten to the segment (2) is attached to a base element (3) of the retainer (2).

## Description

The invention relates to a retainer for transporting and storing a segment of a stator adapted to be part of a generator of a wind turbine.

Wind turbines known in the state of art may employ direct or indirect drive configurations. A wind turbine using an indirect drive configuration comprises a transmission device or gear box for transmitting and converting torque from a rotating rotor hub carrying a plurality of rotor blades and the generator converting mechanical energy to electrical energy. Another type wind turbines uses the direct drive configuration in which the torque directly transmitted to the generator. In either case, conversion of the mechanical energy to electrical energy is achieved by exerting a torque on the rotor which in turn rotates relative to a stator of the generator. The rotor carries a plurality of permanent magnets so that the rotation induces an electric current in conductive windings located on the stator by means of magnetic induction.

Wind turbines with a direct drive technology are promising due to their reduced complexity and reduced number of components which in turn results in a reduced overall weight of the wind turbine. As a consequence, wind turbines of this type perform more reliable and need less service which makes them particularly suited for offshore operations.

The speed of the rotor blades inducing the torque upon the rotor hub is limited. Consequently, the rotational speed of the rotor hub is limited. This may cause problems in particular when the wind turbine is directly driven. In order to allow for a sufficient number of pole changes per time slot when generating electrical power, the rotor and the stator of the generator have to be provided with relative large diameters. In particular, the rotor has to be large enough to carry enough permanent magnets inducing the pole changes. As a consequence, generators used for directly driven wind turbines may have a diameter of several meters, i.e. five to six meters and weigh several tons. Transport, handling and servicing of such large and heavy generators is challenging.

It is common practice to facilitate handling of such a generator by dividing the stator into several segments. For example, the stator may be built from six segments each making up for a 60° section of the annular stator. During assembly of the generator, the segments of the stator are mounted to mounting structure or bedframe. The mounting structure carrying the stator is then connected to the rotor through a bearing wherein the rotor surrounds the stator. Alternatively, the stator may be arranged so as to surround the rotor.

As for now, the transport of the segments of the stator, in particular from the production facility to the assembly location of the generator, is performed by utilising standard means of transport, i.e. pallets. However, it turned out that this way of transporting the segment bears an inherent high risk of mechanical damage. In particular, the conductive windings of the segments typically made from a metal like copper are easily deformed and damaged. Malfunctioning segments are expensive and time consuming to repair. Damages introduced during transport or handling of the segments may include short circuits that are difficult to locate and/or to repair.

It is an object of the present invention to provide a means of transport suitable for storing and transporting segments of a stator adapted to be part of a generator of a wind turbine that in particular may reduce the risk of damages caused by mechanical shocks or the like.

According to the invention, this object is achieved by a retainer of the aforementioned type, wherein a fastening device adapted to releasably fasten to the segment is attached to a base element of the retainer.

The retainer provides a cost effective means reducing damage of the segments stored therein during transport and storage. The retainer may also be used as an aid during assembly of the generator. During transport, the segment typically rests on the fastening device that fastens the base element of the retainer to the segment. Thus, relative motion of the segment with respect to the base element is at least reduced during transport. As a consequence, the introduction of mechanical shocks to the segments is suppressed which results in less damages. Cost and effort of repairs are reduced accordingly.

The retainer is designed as a heavy duty receptacle adapted to retain segments weighing several tons, in particular 3 to 5 tons, even more particularly about 4 tons. The retainer may have an unladen weight 750 kg to 1.5 tons. Respectively, the sides of the rectangular base element may have dimensions of 2 m to 3 m.

The fastening device may be adapted to engage the segment with positive locking. In particular, positive locking may be achieved by correspondingly shaped mating structures. In one embodiment of the invention, the fastening device comprises at least one protrusion adapted to snugly fit into a corresponding recess arranged on the segment. Alternatively, the protrusion may be arranged on the segment so that the protrusion may engage the recess disposed on the fastening device. In either case, the at least one protrusion is arranged to engage and disengage the at least one recess so as to respectively fasten the base element of the retainer to the segment and unfasten the segment from the base element of the retainer. The form fit between the segment and the fastening device provides a particularly simple but effective means to reduce damages during transportation. Accordingly, the retainer has a simple design that may be cost-efficiently manufactured in high quantities.

According to a preferred embodiment of the invention, the fastening device comprises at least one translatable member mounting at least one bolt adapted to engage the segment with positive locking. The translatable member and/or the at least one bolt may be made from a durable material, in particular an alloy or a metal. Even more particularly, the at least one bolt and/or the translatable member may be made from steel, so that a form fit is provided that is capable of sustaining the substantial weight of the segment when the retainer locked to the segment is flipped upside down for positioning a segment during assembly of the generator. Hence, the retainer may be additionally used as a tool during assembly of the stator facilitating safe handling. Preferably the bolt or each bolt engages a hole in a stator frame of the stator segment, which comprises the frame and lamination and coils or windings attached to it.

In a further development of the invention, the translatable member is translatably arranged relative to a frame of the fastening device. The frame is provided with sufficient stability so that it may support and carry the weight of the segment. Translation of the translatable member relative to the frame of the fastening device causes the at least one bolt mounted thereto to engage or disengage the recess disposed in the segment. Thus, the translatable arrangement provides a releasable connection capable of locking the segment to the retainer. The retainer may be used a several times further enhancing cost-effectiveness and reducing the negative impact on the environment that is inherent to the use of the disposal packaging material.

In a preferred embodiment of the invention, the translatable member is adapted to be translated upon actuation of an actuating device. In the context of this patent, actuation is a process induced by a person, in particular the action of the person operating the actuation device so as to fasten the segment to the retainer or release the segment from the retainer. Accordingly, the actuation device may be adapted to be manually operated by the person. In particular, the actuation device may comprise one or more lever arms adapted to displace the at least one translatable member relative to the segment. Alternatively, manual actuation of the actuation device may require the use of a tool like, for example, a screw driver or the like.

In one preferred embodiment of the invention, the actuating device comprises a rotatable member, in particular a screw, adapted to translate the translatable member upon rotation. The rotatable member may comprise a thumbscrew adapted to be manually operated by the person. Alternatively, the rotatable member may be engaged by a corresponding tool, even more particular by a suitable handheld power tool like an electric or pneumatic screw driver. The actuating device is accessible to be actuated from the exterior of the retainer. The retainer may comprise side walls with access openings allowing for access to the rotatable member from outside. Alternatively, the rotatable member may be arranged as a turn pin projecting through the access opening so that it may actuated when needed.

It is beneficial to attach the fastening device indirectly to the base element of the retainer via at least one intermediately arranged dampening means. The dampening means may comprise one or more dampening elements that are configured to at least reduce mechanical shocks introduced to the segment resting on the fastening device during transport. The dampening means may in particular be arranged so as to reduce vibrations introduced to the segment during transport. According to different embodiments of the invention, the dampening means may comprise spring elements like coil springs or leave springs. Alternatively, dampening means may comprise elements made from a deformable material having a suitable module of elasticity.

Preferably, the dampening means is made from an elastomer. One or more elements comprising the dampening means may be made from the elastomer, in particular rubber. The dampening means may be arranged as rubber pads vulcanised to both the base element of the retainer and the frame.

In another alternative embodiment a plurality of first dampening elements made from the elastomer is form fitted to the frame of the retainer. Each first dampening element engages a second dampening element made from the elastomer and form fitted to the base surface of the retainer.

The connection between the dampening means and the base element and/or the fastening means is preferably a form fit that allows for compensation of relative movement of the base element relative to the frame fastened to the segment of the stator. Thus, vibrations occurring during transport of the segment may be compensated.

In embodiments comprising dampening means made from the elastomer, additional connection means is provided that connects the frame to the base element of the retainer. The additional connections means provides a backup secure connection that mounts the frame to the base element even if the dampening means fails or breaks. In one embodiment of the invention, the connection means comprises a pin having a flange that is retained in a cylinder. According to alternative embodiments the pin is firmly connected to the frame or the base element, whereas the cylinder is firmly connected to the other of the frame or the base element. The flange and the cylinder form a limit stop limiting a maximum displacement of the frame relative to the base element. The dampening means may be made from an elastomer prone to fatigue of material. Thus, the dampening means may break when the retainer is repeatedly used for transport of segments. The connection means provide a secure backup solution so that the segment may be transported to the assembly location even when the dampening means already failed.

In a preferred embodiment of the invention, a wall structure extends perpendicularly from the planar base element. The wall structure is adapted to at least partially surround the segment of the stator. The wall structure provides a protective encasing for the segment further reducing the risk of mechanically damaging the segments during transport or storage.

Preferably, corresponding mating structures are arranged on a top face of the wall structure and on a bottom face of the base element. The mating structures are adapted to positively engage each other when one retainer is stacked upon another retainer. Advantageously, a plurality of retainers each carrying a segment of the stator are stacked upon each other during transport. This allows for an optimal use of space provided, for example in a cargo container, truck or the like. The form fit between the retainers stacked upon another furthermore provides stability during transport further reducing the risk of damaging the segments.

In particular, a male member is arranged on the top face of the wall structure or on the bottom face of the base element and a female member is arranged on the other of the top face of the wall structure or the bottom face of the base element. The male member of the retainer is adapted to positively engage the female member of an adjacent retainer. Thus, corresponding mating structures are provided that positively engage each other so as to provide stability for arrangements of stapled retainers. The base element may have a rectangular shape and the wall structure may comprise four pillars having a dimension extending perpendicular from the base element, wherein each pillar is arranged in one corner of the rectangular base surface. In particular, the male or female members of the mating structure may be arranged on the top faces of the pillars.

In one embodiment of the invention, the wall structure comprises side walls arranged around the borders of the rectangular base element, wherein at least two side walls arranged along the opposite sides of the rectangular base element have dimensions extending perpendicular from the base element that correspond to at most half of the dimension of the pillars. The other side walls may have an dimension extending perpendicular from the base element of at most the dimension of the pillars. In particular, the side walls with the smaller dimensions are arranged along the longer sides of the rectangular base element. This retainer is designed to be transported in a very efficient way when empty. In particular, a nested arrangement of retainers stacked upon another may be achieved, wherein one retainer is rotated with respect to an adjacent retainer around an axis normal to the rectangular base element and flipped upside down. A compact and nested arrangement of two empty retainers stacked upon another is achieved. Thus, available space is optimally used, in particular when empty retainers are stored or transported which in turn allows for, in particular, reduction of transportation costs.

It is foreseen to provide the retainer with connecting portions adapted to be accessed by a means of lifting and positioning, in particular a fork of a fork lift. The connecting portions are arranged on the base element. In particular, the connecting portions may be arranged as two channels extending parallel to each other so that the fork of the fork lift may be introduced into the channels from one side. Each connecting portion forms a substantially closed structure so that, when the fork is introduced into the connecting portion, a support is provided in a manner that allows for turning the retainer whilst being held only by the fork engaging the connecting portions. The retainer and the segment locked thereto may be turned around an arbitrary angle around an axis defined by the parallel connecting portions. This may be used to position the segment of the stator retained in the retainer during assembly of the generator. In particular, a placement of the segment of the stator onto a segment trolley in the proper direction may be easily achieved by the use of a fork lift or the like capable of turning the fork around an angle. Thus costs and effort of assembly of the stator is reduced.

In the following, the invention is described in detail with reference to the figures, wherein
- fig. 1: shows an isometric view of a retainer with a segment of a stator,
- fig. 2: shows a first sectional view of the retainer with the segment retained therein,
- fig. 3: shows a second sectional view of the retainer with the segment,
- fig. 4: shows an isometric view of the retainer having a fastening device connected to a base element,
- fig. 5: shows a detailed view of the fastening device comprising a translatable member slidably arranged relative to a frame,
- fig. 6: shows another isometric view of the fastening device comprising the frame with the translatable member,
- fig. 7: shows an isometric view of six empty retainers stacked upon another,
- fig. 8: shows an arrangement of the three retainers upon another, wherein one segment of the stator is retained in each retainer, and
- fig. 9: shows a segment trolley and an assembly device used during assembly of the stator.

Corresponding parts are indicated in all figures by the same reference symbols.

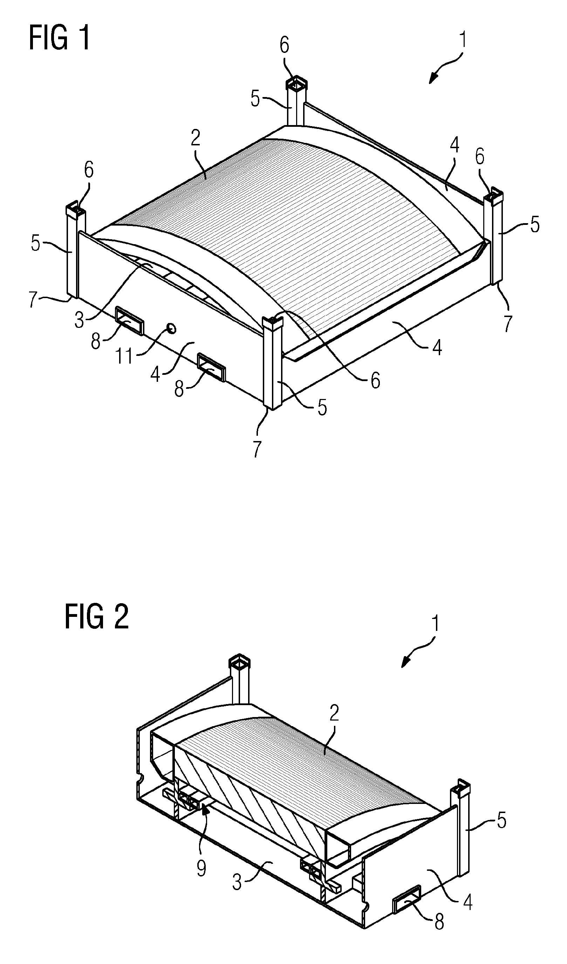

Fig. 1 shows a retainer 1 with a segment 2 of a stator. The segment 2 is locked to the retainer 1. The retainer 1 comprises a substantially rectangular base element 3 and a wall structure extending from the base element 3 in a perpendicular direction. The wall structure comprises four side walls 4 arranged along sides of the rectangular base element 3 and four pillars 5 respectively arranged in corners of the rectangular base element 3.

A female member 6 arranged as a recess is located on a top face of each pillar 5. Respectively, male members 7 are arranged on a bottom face of the base element 3. Each male member 7 is located in one of the corners of the rectangular base element 3 and projects from the base element 3 downwards. The male member 7 and the female member 6 are designed as a mating structure. Male and female member 7, 6 of retainers 1 stacked upon another engage each other with positive locking. The form fit provides stability of the arrangement of stacked retainers 1, in particular versus lateral displacement during transport of the segments 2.

In the exemplary embodiment shown in the figures, the retainer 1 is designed as a heavy duty receptacle adapted to retain a segment 2 weighing several tons, in particular 3 to 5 tons, even more particularly about 4 tons. The retainer 1 has an unladen weight of about 1 ton. The area of the rectangular base element 3 measures 2.3 m x 2.1 m.

As can be seen in fig. 1, the side walls 4 surround the segment 2 retained in the retainer 1. The side walls 4 arranged along the longer sides of the rectangular base element 3 have a height that is smaller than the height of the side walls 4 arranged along the shorter sides of the rectangular base element 3. In this context, the term height is understood as the dimension extending perpendicular to the base element 3. The height of the side walls 4 arranged along the longer sides of the base element 3 is less than half of the height of the pillars 5 arranged in the corners. The side walls 4 arranged along the longer sides of the rectangular base element 3 have larger dimensions and reach almost the height of the pillars 5.

The retainer 1 further comprises connecting portions 8 that are arranged on the base element 3. The connecting portions 8 are shaped as two channels extending parallel to each other. The connecting portions 8 are adapted to be engaged by a means for lifting and positioning the retainer, in particular a fork of a fork lift.

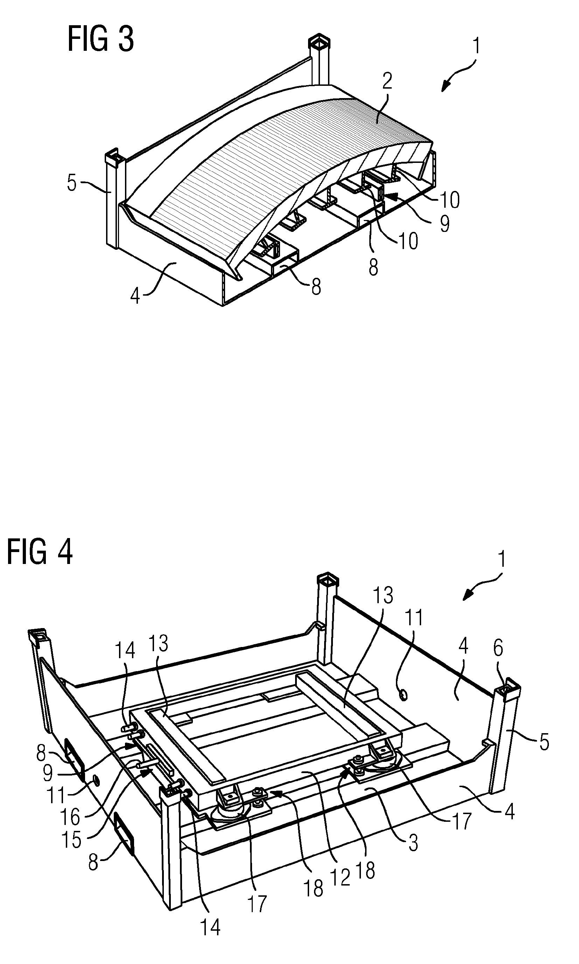

Additionally, access openings 11 are disposed in side walls 4 opposite to each other. Each access opening 11 is adapted to be accessed by a tool, in particular a screw driver, so as to actuate an actuation device 15 that is shown in more detail in figures 4 to 6 arranged within the retainer 1.

Fig. 2 shows the retainer 1 with the segment 2 in a sectional and perspective view. The connecting portion 8 form a raised structure on the base element 3. A fastening device 9 is arranged on top of the connecting portions 8. The fastening device 9 is adapted to engage the segment 2 with positive locking.

Fig. 3 shows another isometric and sectional view of the retainer 1 carrying the segment 2. The segment 2 comprises a support structure comprising a plurality of support means 10 each having a T-shaped cross section.

Fig. 4 shows an empty retainer 1 in an isometric view. A fastening device 9 is attached to the base element 3 of the retainer 1. The fastening device 9 is surrounded by the side walls 4 and comprises a frame 12 and two translatable members 13 slidably arranged relative to the frame. Each translatable member 13 comprises a plurality of bolts 14 that jointly move when the translatable member 13 is translated upon actuation of the actuation device 15. The actuation device 15 comprises a rotatable member 16 that works in a manner similar to an adjustable screw. Accordingly, the translatable member 13 shaped as a jaw is translated upon rotation of the rotatable member 16. The rotatable member 16 may be engaged by an appropriate tool that is inserted into the access opening 11.

The fastening device 9 is adapted to releasably fasten the segment 2 to the retainer 1. In order to reduce mechanical shocks or vibrations introduced to the segment 2 locked onto the fastening device 9 during transport, the fastening device 9 is connected to the base element 3 via dampening means. The dampening means are adapted to at least partially absorb vibrations or the like and comprise dampening elements 17 made from an elastomer. Each dampening element 17 is arranged as a rubber pad wherein each rubber pad engages the frame 12 of the fastening device 9 and the base element 3 of the retainer 1 in a form fit. Form fit is achieved by a process of vulcanisation, whereby opposite ends of the dampening element 17 are connected respectively to the frame 12 and to the base element 3.

Additionally, a connection means 18 mounts the frame 12 of the fastening device 9 to the base element 3 of the retainer 1. The connection means 18 provides a backup solution that attaches the fastening device 9 to the retainer 1 in case that connection established by the elastomeric dampening elements 17 breaks or fails otherwise.

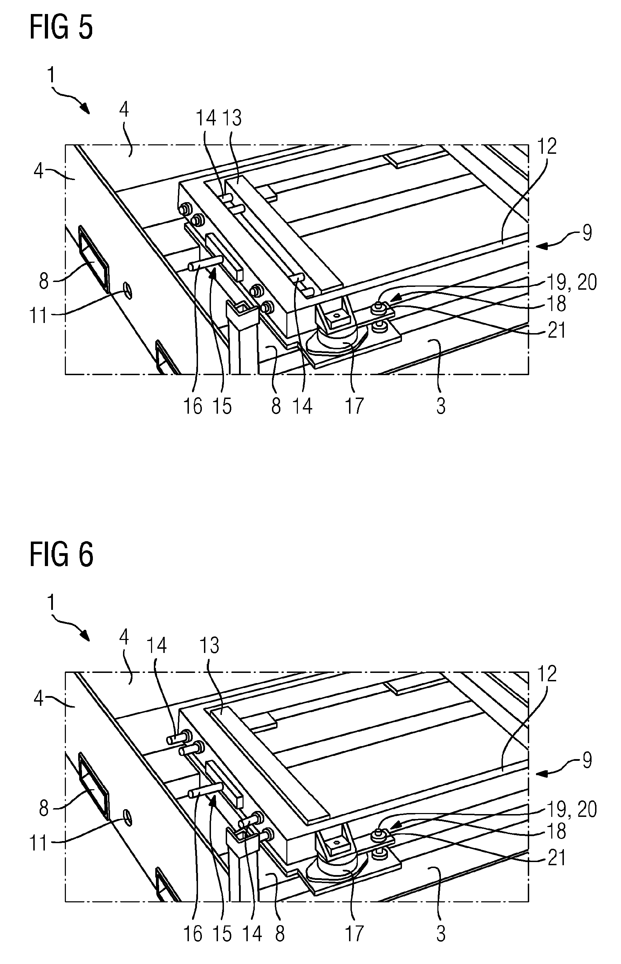

The fastening device 9 and its components is illustrated in more detail in fig. 5. The translatable member 13 shown in fig. 5 is displaced with respect to the frame 12 so that the bolts do not project from the frame 12 in a lateral direction. This corresponds to an unlocked position of the fastening device 9.

The additional connection means 18 comprise a pin 19 having a flange 20 and a cylinder 21. The pin 19 is firmly connected to the base element 3 of the retainer. The cylinder 21 is firmly connected to the frame 12 of the fastening device 9. The pin 19 is slidably received within the cylinder 21 so that a slight displacement of the fastening device in a direction normal to the base element 3 is possible. Maximal displacement of the frame 9 with respect to the base element 3 is limited by a limit stop provided by the flange 20 of the pin 19 abutting against the cylinder 21.

Fig. 6 shows the translatable member 13 arranged in the locked position, wherein the bolts 14 adapted to engage corresponding recesses disposed in the segment 2 of the stator project laterally from the frame 12 of the fastening device 9.

The segment 2 is fastened to the retainer 1 by arranging the segment 2 onto the fastening device 9 while the translatable member 13 is positioned in the unlocked position illustrated in fig. 5. The actuation device 15 is then actuated and the translatable member 13 is translated from the unlocked position to the locked position illustrated in fig. 6 by rotating the rotatable member 16. In the locked position, the bolts 14 engage corresponding recesses disposed in the segment 2 with positive locking. The form fit between the fastening device 9 and the segment 2 provides a secure connection so that the segment may, for example, be safely transported to an assembly location.

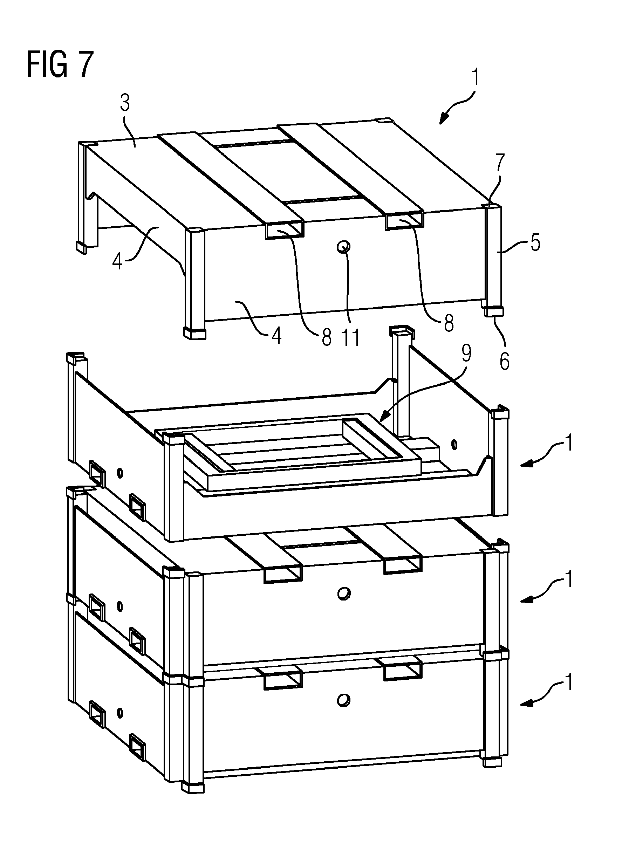

Fig. 7 shows an arrangement of several empty retainers 1 stacked upon another. The rectangular design of the retainers 1 and the arrangement of low side walls 4 arranged along the longer sides of the rectangular base element 3 allows for a nested arrangement that minimises the required space during storage and transport. Nested arrangement is achieved by flipping the retainer 1 stacked upon another retainer 1 upside down and rotating the retainer 1 flipped upside down about an angle of 90° around an axis extending normal to the base element 3. In this configuration the side walls 4 having the smaller dimension of the adjacent retainers 1 abut on each other.

Fig. 7 shows an arrangement of six empty retainers 1 stacked upon each other in a nested arrangement. The stacked retainers 1 exhibit a height smaller than the height of a standard container so that available space is optimally used.

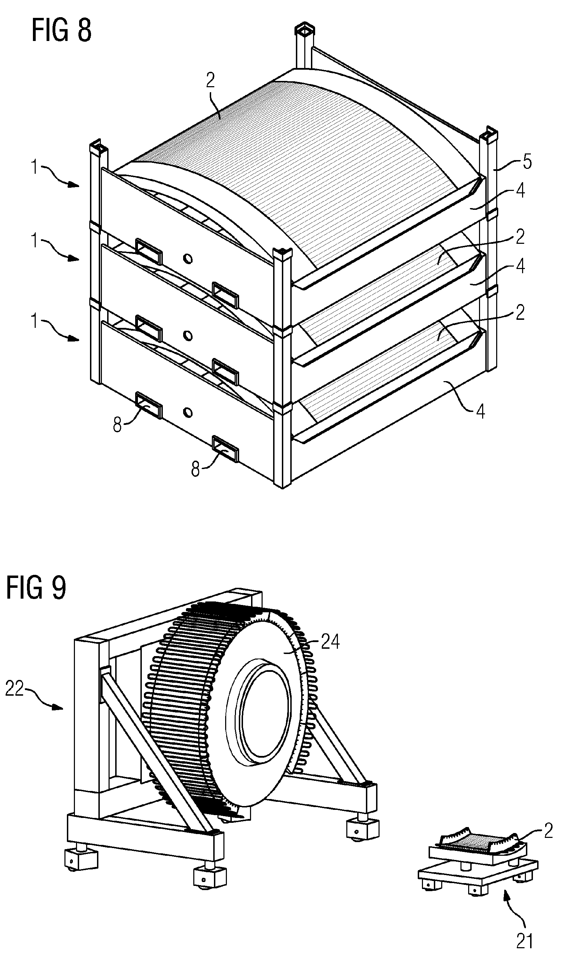

Fig. 8 shows an arrangement of three retainers 1 each carrying one segment 2 of the stator in a perspective view. The retainers 1 are stacked upon another, wherein form fit established by the female members 6 and male members 7 illustrated in more detail in fig. 1 provides stability during transport of the segments 2.

Fig. 9 shows in an exemplary illustration of an assembly device 22 and a trolley 23 carrying a segment 2. The segment 2 may be positioned on the trolley 23 whilst still being locked to the retainer 1. To do so, the connecting portions 18 are engaged by a fork of a fork lift and the retainer 1 carrying the segment 2 is flipped over. The closed connection portions 8 of the retainer 1 allow for a turning of the segment 2 whilst still being connected to the retainer 1. The segment 2 is positioned in the proper orientation onto the trolley 23 before the fastening device 9 is unlocked by actuating the actuation device 15. Afterwards, the retainer 1 may be removed.

For assembly, the segment 2 are mounted to a mounting structure 24 or bedframe which is rotatably arranged on the assembly device 22. The segments 2 may be moved with the help of the trolley 23 into a position suitable for assembly. Although the present invention has been described in detail with reference to the preferred embodiment, the present invention is not limited by the disclosed examples from which the skilled person is able to derive other variations without departing from the scope of the invention.

## Claims

1. Retainer (1) for transporting and storing a segment (2) of a stator adapted to be part of a generator of a wind turbine, **characterized in that** a fastening device (9) adapted to releasably fasten to the segment (2) is attached to a base element (3) of the retainer (2).

2. Retainer (1) according to claim 1, **characterized in that** the fastening device (9) is adapted to engage the segment (2) with positive locking.

3. Retainer (1) according to claim 1 or 2, **characterized in that** the fastening device (9) comprises at least one translatable member (13) mounting at least one bolt (14) adapted to engage the segment (2) with positive locking.

4. Retainer (1) according to claim 3, **characterized in that** the translatable member (13) is translatably arranged relative to a frame (12) of the fastening device (9).

5. Retainer (1) according to claim 3 or 4, **characterized in that** the translatable member (13) is adapted to be translated upon actuation of an actuating device (15).

6. Retainer (1) according to claim 4, **characterized in that** the actuating device (15) comprises a rotatable member (16), in particular a screw, adapted to translate the translatable member (13) upon rotation.

7. Retainer (1) according to one of the previous claims, **characterized in that** the fastening device (9) is indirectly attached to the base element (3) via at least one intermediately arranged dampening means (17), especially made from an elastomer.

8. Retainer (1) according to claim 7, **characterized in that** the connection between the dampening means (17) and the base element (3) and/or the fastening device (9) is a form fit.

9. Retainer (1) according to one of the previous claims, **characterized in that** the a wall structure extends perpendicularly from the planar base element (3) that is adapted to at least partially surround the segment (2).

10. Retainer (1) according to claim 9, **characterized in that** corresponding mating structures are arranged on a top face of the wall structure and on a bottom face of the base element (3), wherein the mating structures are adapted to positively engage each other when one retainer (1) is stacked upon another.

11. Retainer (1) according to claim 10, **characterized in that** a male member (7) is arranged on the top face of the wall structure or on the bottom face of the base element (3) and a female member (6) is arranged on the other of the top face of the wall structure or the bottom face of the base element (3), wherein the male member (7) of the retainer (1) is adapted to positively engage the female member (6) of another retainer (1) stacked upon the retainer (1).

12. Retainer (1) according to one of the previous claims, **characterized in that** base element (3) has a rectangular shape and the wall structure comprises four pillars (5) having a dimension extending perpendicular from the base element (3), wherein each pillar (5) is arranged in one corner of the rectangular base element (3).

13. Retainer (1) according to claim 12, **characterized in that** the wall structure comprises side walls (4) arranged around the borders of the base element (3), wherein at least two side walls (4) arranged along opposite sides of the rectangular base element (3) have dimensions extending perpendicular from the base element (3) that correspond to at most half of the dimension of the pillars (5).

14. Retainer (1) according to one of the previous claims, **characterized in that** connecting portions (8) adapted to be accessed by a means of lifting, in particular a fork of a fork lift, are arranged on the base element (3).

15. Retainer (1) according to one of the previous claims, **characterised in that** the bolt (14) of the fastening device (9) engage in a hole in a stator frame of the stetor segment comparing the stator frame to which a lamination and coils or windings are attached.
